(19) Europäisches Patentamt
European Patent Office
Office européen des brevets

(11) **EP 3 421 666 B1**

(12) **EUROPEAN PATENT SPECIFICATION**

(45) Date of publication and mention
of the grant of the patent:
**28.10.2020   Bulletin 2020/44**

(51) Int Cl.:
*E01C 13/08* (2006.01)          *D01F 6/46* (2006.01)
*D01F 6/30* (2006.01)

(21) Application number: **17382419.4**

(22) Date of filing: **30.06.2017**

(54) **ARTIFICIAL TURF FILAMENTS, AND ARTICLES MADE THEREFROM**

KUNSTRASENFILAMENTE UND DARAUS HERGESTELLTE ARTIKEL

FILAMENTS DE GAZON ARTIFICIEL ET ARTICLES FABRIQUÉS À PARTIR DE CEUX-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.01.2019   Bulletin 2019/01**

(73) Proprietor: **Dow Global Technologies, LLC
Midland, MI 48674 (US)**

(72) Inventors:
 • **LÓPEZ, David
  43006 Tarragona (ES)**

 • **ÁLVAREZ, Eduardo
  43006 Tarragona (ES)**
 • **NIETO, Jesús
  43006 Tarragona (ES)**
 • **BONAVOGLIA, Bárbara
  8810 Horgen (CH)**

(74) Representative: **Elzaburu S.L.P.
Miguel Angel 21, 2nd floor
28010 Madrid (ES)**

(56) References cited:
 **WO-A1-2016/126483      US-A- 6 146 757
 US-A1- 2011 082 256**

## Description

### FIELD

Embodiments of the present disclosure generally relate to artificial turf filaments, articles incorporating artificial turf filaments, and their manufacture.

### BACKGROUND

Synthetic or artificial turfs are increasingly being used as an alternative to natural grass turf for use on sport athletic fields, playgrounds, landscaping, and in other leisure applications. Unlike natural grass turf, synthetic or artificial turfs can absorb heat from the sun. In hotter climates, this may cause the surface of synthetic or artificial turfs to become very warm and uncomfortable for players. A major contributor to heat generation are the components exposed to the sun, such as, the turf yarn and the infill.

Watering of synthetic or artificial turfs has been used as a solution to decrease the surface temperature of synthetic or artificial turfs via evaporative cooling. The evaporation of the water from the surface of the synthetic or artificial turf yarns is endothermic and provides the cooling effect. However, many synthetic or artificial turf yarns are produced from nonpolar polymers, which have a low affinity to water. Limited evaporative cooling may occur due to lower amounts of water remaining on the surface of a synthetic or artificial turf yarn. In addition, the industry desires the use of less water for heat management of synthetic or artificial turfs.

Accordingly, alternative artificial turf filaments and/or artificial turfs having improved water retention is desired.

### SUMMARY

Disclosed in embodiments herein are artificial turf filaments. The artificial turf filaments comprise one or more ethylene/alpha-olefin copolymers having a density of from 0.900 to 0.955 g/cc and a melt index, 12, as measured in accordance with ASTM D1238 (at 190°C. and 2.16 kg), of from 0.1 g/10 min to 20 g/10 min; an ethoxylated alcohol having the formula, R1(OCH2CH2)xOH, where x is an integer from 2 to 10 and R1 is a straight or branched chain alkyl of 20 to 50 carbon atoms; and a functionalized ethylene-based polymer. The artificial turf filaments may be manufactured by providing a formulation comprising one or more ethylene/alpha-olefin copolymers having a density of from 0.900 to 0.955 g/cc and a melt index, 12, as measured in accordance with ASTM D1238 (at 190°C. and 2.16 kg), of from 0.1 g/10 min to 20 g/10 min; an ethoxylated alcohol having the formula, R1(OCH2CH2)xOH, where x is an integer from 2 to 10 and R1 is a straight or branched chain alkyl of 20 to 50 carbon atoms; and a functionalized ethylene-based polymer; and extruding the formulation to form an artificial turf filament.

Also disclosed in embodiments herein are artificial turfs. The artificial turfs comprise a primary backing having a top side and a bottom side; and at least one artificial turf filament; wherein the at least one artificial turf filament is affixed to the primary backing such that the at least one artificial turf filament provides a tufted face extending outwardly from the top side of the primary backing. The artificial turf filament comprises one or more ethylene/alpha-olefin copolymers having a density of from 0.900 to 0.955 g/cc and a melt index, 12, as measured in accordance with ASTM D1238 (at 190°C. and 2.16 kg), of from 0.1 g/10 min to 20 g/10 min; an ethoxylated alcohol having the formula, R1(OCH2CH2)xOH, where x is an integer from 2 to 10 and R1 is a straight or branched chain alkyl of 20 to 50 carbon atoms; and a functionalized ethylene-based polymer.

Additional features and advantages of the embodiments will be set forth in the detailed description which follows, and in part will be readily apparent to those skilled in the art from that description or recognized by practicing the embodiments described herein, including the detailed description which follows, the claims, as well as the appended drawings.

It is to be understood that both the foregoing and the following description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

### BRIEF DESCRIPTION OF THE DRAWINGS

FIG. 1 pictorially depicts an exemplary monofilament extrusion line that may be used to produce the artificial turf filaments according to one or more embodiments shown and described herein.

FIG. 2 pictorially depicts a cutaway view of an artificial turf according to one or more embodiments shown and described herein.

**DETAILED DESCRIPTION**

Artificial Turf Filaments

Reference will now be made in detail to embodiments of artificial turf filaments, artificial turfs incorporating artificial turf filaments, and method of making artificial turf filaments and artificial turfs, characteristics of which are illustrated in the accompanying drawings. As used herein, "filament" refers to monofilaments, multifilaments, extruded films, fibers, yarns, such as, for example, tape yarns, fibrillated tape yarn, slit-film yarn, continuous ribbon, and/or other fibrous materials used to form synthetic grass blades or strands of an artificial turf field. The artificial turf filaments described herein comprise an ethylene/alpha-olefin copolymer, an ethoxylated alcohol, and a functionalized ethylene-based polymer, which are further detailed below. In some embodiments, the artificial turf filaments may further comprise a chemical foaming agent.

*Ethylene/Alpha-Olefin Copolymer*

One or more ethylene/alpha-olefin copolymers may be present in the artificial turf filament. The one or more ethylene/alpha-olefin copolymers may be present in the artificial turf filament in an amount of at least 50 wt.%. All individual values and subranges of at least 50 wt.% are included and disclosed herein. For example, in some embodiments, the artificial turf filament comprises at least 75 wt.%, at least 80 wt.%, at least 85 wt.%, or at least 90 wt.% of the one or more ethylene/alpha-olefin copolymers.

The ethylene/alpha-olefin copolymer comprises greater than or equal to 70 wt.% of the units derived from ethylene and less than or equal to 30 wt.% of the units derived from one or more alpha-olefin comonomers. In some embodiments, the ethylene/alpha-olefin copolymer comprises (a) greater than or equal to 75%, greater than or equal to 80%, greater than or equal to 85%, greater than or equal to 90%, greater than or equal to 92%, greater than or equal to 95%, greater than or equal to 97%, greater than or equal to 98%, greater than or equal to 99%, greater than or equal to 99.5%, from 70% to 99.5%, from 70% to 99%, from 70% to 97% from 70% to 94%, from 80% to 99.5%, from 80% to 99%, from 80% to 97%, from 80% to 94%, from 80% to 90%, from 85% to 99.5%, from 85% to 99%, from 85% to 97%, from 88% to 99.9%, 88% to 99.7%, from 88% to 99.5%, from 88% to 99%, from 88% to 98%, from 88% to 97%, from 88% to 95%, from 88% to 94%, from 90% to 99.9%, from 90% to 99.5% from 90% to 99%, from 90% to 97%, from 90% to 95%, from 93% to 99.9%, from 93% to 99.5% from 93% to 99%, or from 93% to 97%, by weight, of the units derived from ethylene; and (b) less than or equal to 25 percent, or less than or equal to 20 percent, less than or equal to 18%, less than or equal to 15%, less than or equal to 12%, less than or equal to 10%, less than or equal to 8%, less than or equal to 5%, less than or equal to 4%, less than or equal to 3%, less than or equal to 2%, less than or equal to 1%, from 0.1 to 20 %, from 0.1 to 15 %, 0.1 to 12%, 0.1 to 10%, 0.1 to 8%, 0.1 to 5%, 0.1 to 3%, 0.1 to 2%, 0.5 to 12%, 0.5 to 10%, 0.5 to 8%, 0.5 to 5%, 0.5 to 3%, 0.5 to 2.5%, 1 to 10%, 1 to 8%, 1 to 5%, 1 to 3%, 2 to 10%, 2 to 8%, 2 to 5%, 3.5 to 12%, 3.5 to 10%, 3.5 to 8%, 3.5% to 7%, or 4 to 12%, 4 to 10%, 4 to 8%, or 4 to 7%, by weight, of units derived from an alpha-olefin comonomer. The comonomer content may be measured using any suitable technique, such as techniques based on nuclear magnetic resonance ("NMR") spectroscopy, and, for example, by 13C NMR analysis as described in U.S. Patent 7,498,282.

Further illustrating examples in the art are found in US 2011/082256 and US 6 146 757.

Suitable alpha-olefin comonomers may include alpha-olefin comonomers having no more than 20 carbon atoms. The one or more alpha-olefins may be selected from the group consisting of C3-C20 acetylenically unsaturated monomers and C4-C18 diolefins. For example, the alpha-olefin comonomers may have 3 to 10 carbon atoms, or 3 to 8 carbon atoms. Exemplary alpha-olefin comonomers include, but are not limited to, propylene, 1-butene, 1-pentene, 1-hexene, 1-heptene, 1-octene, 1-nonene, 1-decene, and 4-methyl-1-pentene. The one or more alpha-olefin comonomers may, for example, be selected from the group consisting of propylene, 1-butene, 1-hexene, and 1-octene; or in the alternative, from the group consisting of 1-butene, 1-hexene and 1-octene. In some embodiments, the ethylene/alpha-olefin copolymer comprises greater than 0 wt.% and less than 30 wt.% of units derived from one or more of octene, hexene, or butene comonomers.

The ethylene/alpha-olefin copolymer may be made according to any suitable polymerization process, including but not limited to solution, slurry, or gas phase polymerization processes in the presence of a metallocene, constrained geometry catalyst systems, Ziegler-Natta catalysts, or bisphenyl phenol catalyst systems. The solution, slurry, or gas phase polymerization may occur in a single reactor, or alternatively, in a dual reactor system wherein the same product is produced in each of the dual reactors. Information on preparation and use of the multimetallic catalysts are found in U.S. Patent No. 9,255,160.

Suitable polymers may include, for example, high density polyethylene (HDPE), linear low density polyethylene (LLDPE), ultra-low density polyethylene (ULDPE), homogeneously branched linear ethylene polymers, and homogeneously branched substantially linear ethylene polymers (that is, homogeneously branched long chain branched ethylene polymers). In some embodiments, the ethylene/alpha-olefin copolymer is an LLDPE. Commercial examples of suitable ethylene/alpha-olefin copolymers include those sold under the trade names ATTANE™, AFFINITY™, DOWLEX™, ELITE™, ELITE AT™, and INNATE™ all available from The Dow Chemical Company (Midland, MI); LUMICENE® available from Total SA; and EXCEED™ and EXACT™ available from Exxon Chemical Company.

In embodiments herein, the ethylene/alpha-olefin copolymer is characterized by a density of 0.900 g/cc to 0.955 g/cc. All individual values and subranges of at least 0.900 g/cc to 0.955 g/cc are included and disclosed herein. For example, in some embodiments, the ethylene/alpha-olefin copolymer is characterized by a density of 0.910 to 0.940 g/cc, 0.915 to 0.940 g/cc, 0.915 to 0.935 g/cc, 0.915 to 0.930 g/cc, 0.915 to 0.925 g/cc, 0.920 g/cc to 0.940 g/cc, 0.920 to 0.935 g/cc, or 0.920 to 0.930 g/cc. Density may be measured in accordance with ASTM D792.

In addition to density, the ethylene/alpha-olefin copolymer is characterized by melt index, I2, as measured in accordance with ASTM D1238 (at 190°C. and 2.16 kg), of from 0.1 g/10 min to 20 g/10 min. All individual values and subranges of at least 0.1 g/10 min to 20 g/10 min are included and disclosed herein. For example, in some embodiments, the ethylene/alpha-olefin copolymer is characterized by a melt index, I2, of 0.1 g/10 min to 10.0 g/10 min, 0.5 g/10 min to 10.0 g/10 min, 1.0 g/10 min to 10.0 g/10 min. In other embodiments, the ethylene/alpha-olefin copolymer is characterized by a melt index, I2, 1.0 g/10 min to 7.0 g/10 min, 1.0 g/10 min to 5.0 g/10 min, or 1.0 g/10 min to 4.0 g/10 min. Melt index, I2, is measured in accordance with ASTM D1238 (at 190°C. and 2.16 kg).

In addition to density and melt index, I2, the ethylene/alpha-olefin copolymer may be characterized by a melt flow ratio, I10/I2, of 6.0 to 10.0. All individual values and subranges of 6.0 to 10.0 are included and disclosed herein. For example, in some embodiments, the ethylene/alpha-olefin copolymer may be characterized by a melt flow ratio, I10/I2, of 6.5 to 9.0. In other embodiments, the ethylene/alpha-olefin copolymer may be characterized by a melt flow ratio, I10/I2, of 7.0 to 8.5. Melt index, I10, is measured in accordance with ASTM D1238 (190°C. and 10.0 kg).

In addition to density, melt index, I2, and melt flow ratio, I10/I2, the ethylene/alpha-olefin copolymer may be characterized by a molecular weight distribution (Mw/Mn) of from 1.9 to 6.0. All individual values and subranges of from 1.9 to 6.0 are included and disclosed herein. For example, the ethylene/alpha-olefin copolymer may be characterized by a molecular weight distribution (Mw/Mn) of from 2.0 to 4.5. In some embodiments, the ethylene/alpha-olefin copolymer may be characterized by a molecular weight distribution (Mw/Mn) of from 2.0 to 3.0 or from 3.0 to 4.3. The Mw/Mn ratio may be determined by conventional gel permeation chromatography (GPC) as outlined below.

*Ethoxylated Alcohol*

The ethoxylated alcohol may be present in the artificial turf filament in an amount of from 0.05 wt.% to 10 wt.%. All individual values and subranges of from 0.05 wt.% to 10 wt.% are included and disclosed herein. For example, in some embodiments, the artificial turf filament comprises from 0.05 wt.% to 7.5 wt.%, from 0.05 wt.% to 5.0 wt.%, or from 0.05 wt.% to 3.0 wt.% of the ethoxylated alcohol.

The ethoxylated alcohol has the formula, $R_1(OCH_2CH_2)_xOH$, where x is an integer from 2 to 10 and $R_1$ is a linear or branched alkyl group of 20 to 50 carbon atoms. The chain length of $R_1$ and the number (x) of monomer units of the hydrophilic oligomer may be discrete values, or alternatively, may be average values. In one embodiment, $R_1$ is a straight chain alkyl with an average of 30 carbon atoms and x has an average value of 2.5, and the ethoxylated alcohol may have the following formula: $CH_3CH_2(CH_2CH_2)_{13}CH_2CH_2(OCH_2CH_2)_{2.5}OH$. Examples of suitable ethoxylated alcohols that are commercially available may include Unithox™ ethoxylates, available from Baker Petrolite Corporation (Tulsa, Oklahoma). In embodiments described herein, the ethoxylated alcohol may also include mixtures of two or more compounds of the formula, $R_1(OCH_2CH_2)_xOH$, where x is an integer from 2 to 10 and $R_1$ is a straight or branched chain alkyl of 20 to 50 carbon atoms.

The ethoxylated alcohol may have a melting point, as determined according to ASTM D-127, of from 60 to 110°C. All individual values and subranges of from 60 to 110°C are included and disclosed herein. For example, in some embodiments, the ethoxylated alcohol may have a melting point, as determined according to ASTM D-127, of from 65 to 110°C, from 70 to 110°C, from 80 to 110°C, from 80 to 100°C, or from 85 to 95°C.

The ethoxylated alcohol may have a hydroxyl number, as determined according to ASTM E-222, of from 10 to 90 mg KOH/g sample. All individual values and subranges of from 10 to 90 mg KOH/g sample are included and disclosed herein. For example, in some embodiments, the ethoxylated alcohol may have a hydroxyl number, as determined according to ASTM E-222, of from 15 to 90 mg KOH/g sample, from 25 to 90 mg KOH/g sample, from 35 to 90 mg KOH/g sample, from 45 to 90 mg KOH/g sample, or from 60 to 90 mg KOH/g sample.

*Functionalized Ethylene-Based Polymer*

The functionalized ethylene-based polymer may be present in the artificial turf filament in an amount of from 0.05 wt.% to 10 wt.%. All individual values and subranges of from 0.05 wt.% to 10 wt.% are included and disclosed herein. For example, in some embodiments, the artificial turf filament comprises from 0.05 wt.% to 7.5 wt.%, from 0.05 wt.% to 5.0 wt.%, or from 0.05 wt.% to 3.0 wt.% of the functionalized ethylene-based polymer.

The term "functionalized ethylene-based polymer," as used herein, refers to an ethylene-based polymer that comprises at least one functional group (chemical substituent), linked by a covalent bond, and which group comprises at least one hetero-atom. A heteroatom is defined as an atom of an organic molecule that is not carbon or hydrogen. Common heteroatoms include, but are not limited to, oxygen, nitrogen, sulfur, and phosphorus. The at least one functional group (for example, maleic anhydride or acrylic acid) can react with a carbon atom located on the backbone of the ethylene-based polymer.

In embodiments herein, the functionalized ethylene-based polymer may have a density from 0.860 to 0.965 g/cc, from 0.865 to 0.960 g/cc, or from 0.870 to 0.955 g/cc. Density is measured according to ASTM D792. In addition to the density, the functionalized ethylene-based polymer may have a melt index, 12, (2.16 kg/190°C) from 0.5 g/10 min to 1300 g/10 min, from 1 g/10 min to 300 g/10 min, 1 g/10 min to 50 g/10 min, or from 5 g/10 min to 50 g/10 min. Melt Index, 12, is measured according to ASTM D1238 at 2.16 kg and 190°C.

The functionalized ethylene-based polymer may be an acid-functionalized ethylene-based polymer, anhydride-grafted ethylene-based polymer, or an ester-functionalized ethylene-based polymer. Examples of suitable commercial functionalized ethylene-based polymers include PRIMACOR™ Copolymers and AMPLIFY™ Functional Polymers, both available from The Dow Chemical Company (Midland, MI). The functionalized ethylene-based polymer may comprise a combination of two or more embodiments as described herein, for e.g., an ethylene acrylic acid and ethylene methacrylate.

The acid functionalized ethylene-based polymer may be an acid-functionalized ethylene-based interpolymer or copolymer. The acid functionality is present in a majority molar amount, based on the amount of functional groups bonded to the polymer. In some embodiments, the acid functionalized ethylene-based polymer comprises units derived from ethylene and a carboxylic acid. In other embodiments, the acid functionalized ethylene-based polymer comprises units derived from ethylene and acrylic acid. In further embodiments, the acid functionalized ethylene-based polymer comprises units derived from ethylene and methacrylic acid.

In some embodiments herein, the functionalized ethylene-based polymer is an ethylene acrylic acid copolymer or an ethylene methacrylic acid copolymer. In other embodiments herein, the functionalized ethylene-based polymer is an ethylene acrylic acid copolymer. The ethylene acrylic acid copolymer or ethylene methacrylic acid copolymer may comprise from 5 to 20, or from 7 to 12, weight percent of acid in the copolymer. In addition to the weight percent acid content, the ethylene acrylic acid copolymer or ethylene methacrylic acid copolymer may have a melt index (12) from 1 to 50 g/10 min, from 2 to 25 g/10 min, from 3 to 12 g/10 min. Melt Index, 12, is measured according to ASTM D1238 at 2.16 kg and 190°C.

In some embodiments herein, the functionalized ethylene-based polymer is an anhydride-grafted ethylene/a-olefin polymer. The anhydride-grafted ethylene/a-olefin polymer comprises units derived from ethylene, alpha-olefin, and maleic anhydride. The anhydride functionality is present in a majority molar amount, based on the amount of functional groups bonded to the polymer. The anhydride-grafted ethylene/a-olefin polymer may comprise from 0.2 to 5, or from 0.5 to 2, weight percent maleic anhydride in the polymer. In addition to the weight percent of maleic anhydride content, the anhydride-grafted ethylene/a-olefin polymer may have a melt index (12) from 0.2 to 10/10 min or from 0.5 to 5 g/10 min, as measured according to ASTM D1238 at 2.16 kg and 190°C.

In some embodiments herein, the functionalized ethylene-based polymer is an ester-functionalized ethylene-based polymer. In an ester-functionalized ethylene-based polymer, ester functionality is present in a majority molar amount, based on the amount of functional groups bonded to the polymer. Ester-functionalized ethylene-based polymer may be selected from ethylene acrylate copolymers (such as ethylene butyl-acrylate copolymers, ethylene ethylacrylate copolymers and ethylene methyl-acrylate copolymers (EBAs, EEAs and EMAs)); ethylene/butyl acrylate/carbon monoxide (EnBACO); ethylene/butyl acrylate/glycidyl methyacrylate (EnBAGMA); ethylene butylacrylate, or ethylene glycidyl methacrylate. In some embodiments, the functionalized ethylene-based polymer comprises units derived from ethylene and an acrylate. The acrylate may be selected from ethylacrylate, methylacrylate, or butylacrylate. The ester-functionalized ethylene-based polymer may comprise from 5 to 20, or from 7 to 12, weight percent of ester content. In addition to the weight percent of ester content, the ester-functionalized ethylene-based polymer may have a melt index (12) from 1 to 50 g/10 min, from 2 to 25 g/10 min, or from 5 to 12 g/10 min, as measured according to ASTM D1238 at 2.16 kg and 190°C.

In embodiments herein, the artificial turf filaments may further include one or more polyethylene resins. For example, the artificial turf filaments may, optionally, comprise an ultra-low or very low density polyethylene (ULDPE or VLDPE), a low density polyethylene (LDPE), a linear low density polyethylene (LLDPE), a medium density polyethylene (MDPE), a high density polyethylene (HDPE), or combinations thereof.

In embodiments herein, the artificial turf filaments may further include one or more optional additives. Nonlimiting examples of suitable additives include chemical foaming agents, antioxidants, pigments, colorants, UV stabilizers, UV absorbers, curing agents, cross linking co-agents, boosters and retardants, processing aids, fillers, coupling agents, ultraviolet absorbers or stabilizers, antistatic agents, nucleating agents, slip agents, plasticizers, lubricants, viscosity control agents, tackifiers, anti-blocking agents, surfactants, extender oils, acid scavengers, and metal deactivators. Additives can be used in amounts ranging from less than about 0.01 wt % to more than about 10 wt % based on the weight of the composition.

In some embodiments herein, the artificial turf filaments further comprise chemical foaming agents. The chemical foaming agent may be present in the artificial turf filament in an amount of from 0.05 wt.% to 10 wt.%. All individual values and subranges of from 0.05 wt.% to 10 wt.% are included and disclosed herein. For example, in some embodiments, the artificial turf filament comprises from 0.05 wt.% to 7.5 wt.%, from 0.05 wt.% to 5.0 wt.%, or from 0.05 wt.% to 3.0 wt.% of the chemical foaming agent.

Suitable chemical foaming agents may include sodium bicarbonate, ammonium carbonate and ammonium hydrogen carbonate, citric acid or citrates, such as sodium citrate, sodium glutaminate, phthalic anhydride, benzoic acid, benzoates, such as aluminum benzoate, azodicarbonamide, azoisobutyronitrile and dinitropentamethylene. The use of chemical foaming agents is exemplified by the teachings to processes of making ethylenic polymer foam structures and processing them in Chapter 9 of the "Handbook of Polymeric Foams and Technology" entitled "Polyolefin Foam", written by C. P. Park, edited by D. Klempner and K. C. Frisch, Hanser Publishers, Munich, Vienna, New York Barcelona (1991), which is herein incorporated in reference. Examples of commercially available chemical foaming agents may be obtained from Bergan International under their FOAMAZOL™ brand name, Clariant under their HYDROCEROL™ brand name, or Lehmann&Voss&Co under their LUVOBATCH™ brand name.

Artificial Turf Filament Process

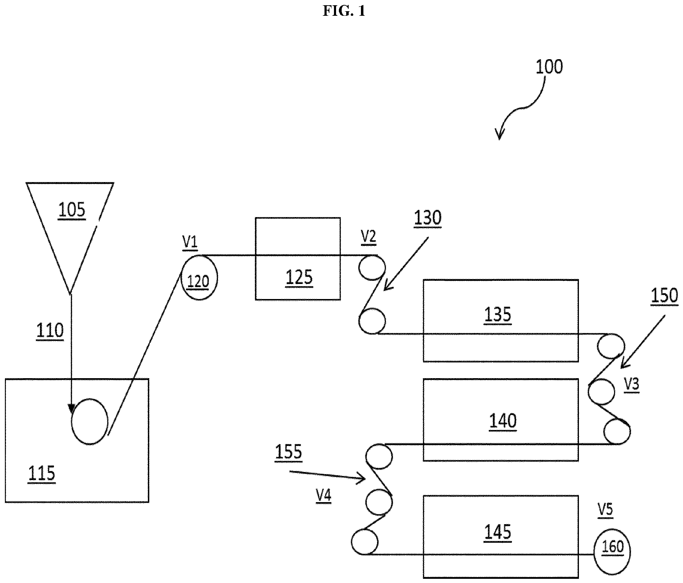

The artificial turf filaments described herein may be made using any appropriate process for the production of artificial turf filament from polymer compositions as the artificial turf filaments described herein are process independent. Referring to FIG. 1, the following describes one such exemplary process **100** that may be used.

Artificial turf filaments may be made by extrusion. Suitable artificial turf filament extruders may be equipped with a single PE/PP general purpose screw and a melt pump ("gear pump" or "melt pump") to precisely control the consistency of polymer volume flow into the die **105**. Artificial turf filament dies **105** may have multiple single holes for the individual filaments distributed over a circular or rectangular spinplate. The shape of the holes corresponds to the desired filament cross-section profile, including for example, diamond, rectangular, dog-bone, and v-shaped. A standard spinplate has 50 to 160 die holes of specific dimensions. Lines can have output rates from 150 kg/h to 350 kg/h.

The artificial turf filaments **110** may be extruded into a water bath **115** with a die-to-water bath distance of from 16 to 40 mm. Coated guiding bars in the water redirect the filaments **110** towards the first takeoff set of rollers **120**. The linear speed of this first takeoff set of rollers **120** may vary from 15 to 70 m/min. The first takeoff set of rollers **120** can be heated and used to preheat the filaments **110** after the waterbath **115** and before entering the stretching oven **125**. The stretching oven **125** may be a heated air or water bath oven. The filaments **110** may be stretched in the stretching oven **125** to a predetermined stretched ratio. In some embodiments, the stretch ratio is at least 4. In other embodiments, the stretch ratio is at least 4.5, 4.8, 5.0, 5.2, or 5.5. The stretching ratio is the ratio between the speed of the second takeoff set of rollers **130** after the stretching oven and the speed of the first takeoff set of rollers **120** before the stretching oven (V2/V1 as shown in FIG. 1). The second takeoff set of rollers **120** may be run at a different (higher or lower) speed than the first set of rollers **130**.

After the filaments **110** are passed over the second takeoff set of rollers **130,** they are then drawn through a set of three annealing ovens **135, 140,** and **145**. The three annealing ovens **135, 140,** and **145** may be either a hot air oven with co- or countercurrent hot air flow, which can be operated from 50 to 150°C or a hot water-oven, wherein the filaments **110** are oriented at temperatures from 50 to 98°C. At the exit of the first annealing oven **135,** the filaments **110** are passed onto a third set of rollers **150** that may be run at a different (higher or lower) speed than the second set of rollers **130**. The linear velocity ratio of the third set of rollers **150** located after the oven to the second set of rollers **130** located in front of the oven may be referred to as either a stretching or relaxation ratio. At the exit of the second annealing oven **140,** the filaments **110** are passed onto a fourth set of rollers **155** that may be run at a different (higher or lower) speed than the third set of rollers **150**. At the exit of the third annealing oven **145,** the filaments **110** are passed onto a fifth set of rollers **160** that may be run at a different (higher or lower) speed than the fourth set of rollers **155**.

In some embodiments, a method of manufacturing an artificial turf filament comprises providing a formulation comprising of one or more ethylene/alpha-olefin copolymers as previously described herein, an ethoxylated alcohol as previously described herein, and a functionalized ethylene-based polymer as previously described herein, and extruding the formulation into an artificial turf filament. The artificial turf filament may be extruded to a specified width, thickness, and/or cross-sectional shape depending on the physical dimensions of the extruder. As mentioned above, the artificial turf filament can include a monofilament, a multifilament, a film, a fiber, a yarn, such as, for example, tape yarn, fibrillated tape yarn, or slit-film yarn, a continuous ribbon, and/or other fibrous materials used to form synthetic grass blades or strands of an artificial turf field.

The artificial turf filament may optionally undergo further post-extrusion processing (e.g., annealing, cutting, etc.).

Artificial Turf

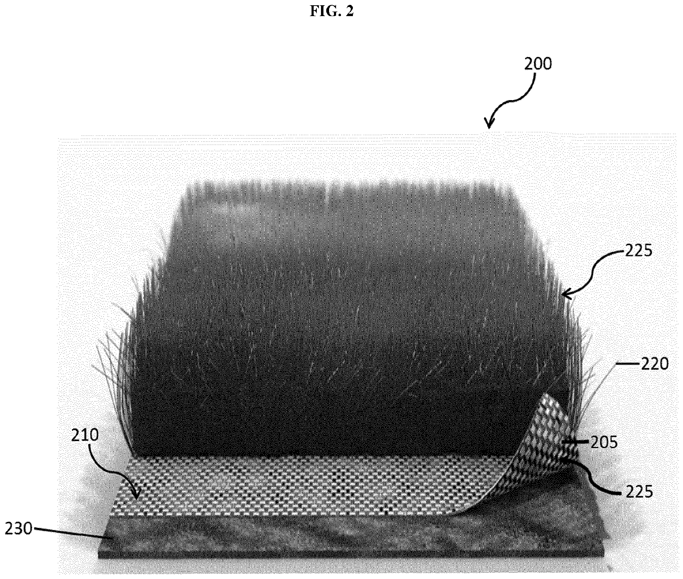

One or more embodiments of the artificial turf filaments described herein may be used to form an artificial turf field. Referring to FIG. 2, depicted is a cutaway view of an artificial turf field **200** according to one or more embodiments shown and/or described herein. The artificial turf field **200** comprises a primary backing **205** having a top side **210** and a bottom side **215;** and at least one artificial turf filament **220** as previously described herein. The at least one artificial turf filament **220** is affixed to the primary backing **205** such that the at least one artificial turf filament **220** provides a tufted face **225** extending outwardly from the top side **210** of the primary backing **205.** As used herein, "affix," "affixed," or "affixing" includes, but is not limited to, coupling, attaching, connecting, fastening, joining, linking or securing one object to another object through a direct or indirect relationship. The tufted face **225** extends from the top side **210** of the primary backing **205,** and can have a cut pile design, where the artificial turf filament loops may be cut, either during tufting or after, to produce a pile of single artificial turf filament ends instead of loops.

The primary backing **205** can include, but is not limited to, woven, knitted, or nonwoven fibrous webs or fabrics made of one or more natural or synthetic fibers or yarns, such as polypropylene, polyethylene, polyamides, polyesters, and rayon. The artificial turf field **200** may further comprise a secondary backing **230** bonded to at least a portion of the bottom side **215** of the primary backing **205** such that the at least one artificial turf filament **220** is affixed in place to the bottom side **215** of the primary backing **205.** The secondary backing **230** may comprise polyurethane (including, for example, polyurethane supplied under the name ENFORCER™ or ENHANCER™ available from The Dow Chemical Company) or latex-based materials, such as, styrene-butadiene latex, or acrylates.

The primary backing **205** and/or secondary backing **230** may have apertures through which moisture can pass. The apertures may be generally annular in configuration and are spread throughout the primary backing **205** and/or secondary backing **230.** Of course, it should be understood that there may be any number of apertures, and the size, shape and location of the apertures may vary depending on the desired features of the artificial turf field **200.**

The artificial turf field **200** may be manufactured by providing at least one artificial turf filament **220** as described herein and affixing the at least one artificial turf filament **220** to a primary backing **205** such that that at least one artificial turf filament **220** provides a tufted face **225** extending outwardly from a top side **210** of the primary backing **205.** The artificial turf field **200** may further be manufactured by bonding a secondary backing **230** to at least a portion of the bottom side **215** of the primary backing **205** such that the at least one artificial turf filament **220** is affixed in place to the bottom side **215** of the primary backing **205.**

The artificial turf field **200** may optionally comprise a shock absorption layer underneath the secondary backing of the artificial turf field. The shock absorption layer can be made from polyurethane, PVC foam plastic or polyurethane foam plastic, a rubber, a closed-cell crosslinked polyethylene foam, a polyurethane underpad having voids, elastomer foams of polyvinyl chloride, polyethylene, polyurethane, and polypropylene. Non- limiting examples of a shock absorption layer are DOW® ENFORCER™ Sport Polyurethane Systems, and DOW® ENHANCER™ Sport Polyurethane Systems.

The artificial turf field **200** may optionally comprise an infill material. Suitable infill materials include, but are not limited to, mixtures of granulated rubber particles like SBR (styrene butadiene rubber) recycled from car tires, EPDM (ethylene-propylene-diene monomer), other vulcanised rubbers or rubber recycled from belts, thermoplastic elastomers (TPEs) and thermoplastic vulcanizates (TPVs).

The artificial turf field **200** may optionally comprise a drainage system. The drainage system allows water to be removed from the artificial turf field and prevents the field from becoming saturated with water. Nonlimiting examples of drainage systems include stone-based drainage systems, EXCELDRAIN™ Sheet 100, EXCELDRAIN™ Sheet 200, AND EXCELDRAIN™ EX-T STRIP (available from American Wick Drain Corp., Monroe, N.C.).

The embodiments described herein may be further illustrated by the following nonlimiting examples.

**TEST METHODS**

Density

Density is measured according to ASTM D792.

Melt Index

Melt index, or 12, is measured according to ASTM D1238 at 190°C, 2.16 kg. Melt index, or 110, is measured in accordance with ASTM D1238 at 190°C, 10 kg.

Conventional Gel Permeation Chromatography (GPC)

The gel permeation chromatographic system consists of either a Polymer Laboratories Model PL-210 or a Polymer Laboratories Model PL-220 instrument. The column and carousel compartments are operated at 140°C. Three Polymer Laboratories 10-micron Mixed-B columns are used. The solvent is 1,2,4-trichlorobenzene. The samples are prepared at a concentration of 0.1 grams of polymer in 50 milliliters of solvent containing 200 ppm of butylated hydroxytoluene (BHT). Samples are prepared by agitating lightly for 2 hours at 160° C. The injection volume used is 100 microliters and the flow rate is 1.0 ml/minute.

Calibration of the GPC column set is performed with 21 narrow molecular weight distribution polystyrene standards with molecular weights ranging from 580 to 8,400,000, arranged in 6 "cocktail" mixtures with at least a decade of separation between individual molecular weights. The standards are purchased from Polymer Laboratories (Shropshire, UK). The polystyrene standards are prepared at 0.025 grams in 50 milliliters of solvent for molecular weights equal to or greater than 1,000,000, and 0.05 grams in 50 milliliters of solvent for molecular weights less than 1,000,000. The polystyrene standards are dissolved at 80°C. with gentle agitation for 30 minutes. The narrow standards mixtures are run first and in order of decreasing highest molecular weight component to minimize degradation. The polystyrene standard peak molecular weights are converted to polyethylene molecular weights using the following equation (as described in Williams and Ward, J. Polym. Sci., Polym. Let., 6, 621 (1968)): $M_{polyethylene}=0.4316 \times (M_{polystyrene})$. Polyethylene equivalent molecular weight calculations are performed using Viscotek TriSEC software Version 3.0.

Number-, weight- and z-average molecular weights are calculated according to the following equations:

$$M_n = \frac{\sum^i Wf_i}{\sum^i \left( Wf_i \middle/ M_i \right)}$$

$$M_w = \frac{\sum^i \left( Wf_i * M_i \right)}{\sum^i Wf_i}$$

$$M_z = \frac{\sum^i \left( Wf_i * M_i^2 \right)}{\sum^i Wf_i * M_i}$$

wherein Mn is the number average molecular weight, Mw, is the weight average molecular weight, Mz is the z-average molecular weight, $Wf_i$ is the weight fraction of the molecules with a molecular weight of $M_i$.

*Water Adsorption*

Drying rate test method was performed in Sartorius Moisture Analyzer MA100, based on an adaptation of the standard work instruction PORTAR-FIBER 89.00. Film samples were cut into discs of 5 cm diameter and submerged in distilled water for at least 15 minutes (no difference in water adsorption was observed when watering for 15 minutes and overnight). Subsequently, specimens were hold in air for 30 seconds and then they were introduced in an infrared heating oven with a weighting device for 12 minutes. The heating program was defined as a constant temperature of 80°C. Weight loss, due to water evaporation, was recorded during the 12 minutes. Performance is evaluated through the following parameter:

*Water Adsorption.* It reflects the amount of water that the film is able to capture, which should correlate to the amount of water present in the pitch just after watering. The index is weighted per gram of polymer, as shown in Equation 1, since samples are slightly different in weight. The calculation takes into account the weight of water after watering for 15 minutes (difference between the total weight at the beginning of the drying test, i.e. t=0, and the dry weight) and the polymer dry weight.

$$Equation\ 1:\ Water\ Adsorption = \frac{W_{t=0\ min} - W_{dry}}{W_{dry}}\ \left(\frac{mg\ water}{g\ polymer}\right)$$

_Water Adsorption After Rinsing._ In order to simulate the loss in water adsorption capability after pitch usage (due to surfactant release from the surface), a mild organic solvent rinsing was conducted. Samples were immersed in methanol for 2 seconds and then held under a dry nitrogen stream to stop the rinsing. Water adsorption was then measured, as described above, on the rinsed samples.

_Water Contact Angle_

Contact angle measurements of water are performed using a Dataphysics OCA20 device. A droplet of 1 $\mu$L is dispensed and a digital image was recorded as soon as possible after deposition. The drop shape was fitted to a circle and the contact angle was then calculated from this drop profile using the software supplied with the OCD20 device. At least ten separate drops of water are employed for each film. The average contact angle is determined and reported in degrees (°).

_Tenacity and Ultimate Elongation_

A single filament of 250 mm length is measured in a Zwick tensile dynamometer at 250 mm/min until the fiber breaks. Tenacity is defined as the tensile force at break divided by the linear weight, and expressed in cN/dtex. Ultimate elongation is the strain at fiber break, expressed in percentage of deformation.

_Basis Weight_

Basis weight is evaluated by cutting 50 meters of yarns and weighting it on a standard weighing balance. The basis weight is defined as grams per 10,000 meters and expressed as dtex.

_Shrinkage %_

The shrinkage of a monofilament (expressed as the percentage reduction in length of a 1 meter sample of the monofilament) is measured by immersing the monofilament for 20 seconds in a bath of silicon oil maintained at 90°C. Shrinkage is then calculated as: (length before - length after)/length before *100%.

**EXAMPLES**

**Materials Used**

The ethylene alpha-olefin copolymer is DOWLEX™ 2107 GC, available from The Dow Chemical Company (Midland, MI) having a density of 0.917 g/cc, a melt index, 12, of 2.3 g/10 min, an 110/12 of 8.1, and a Mw/Mn of 3.7. The ethoxylated alcohol is UNITHOX™ 420, available from Baker Hughes Inc. (Houston, TX), having a melting point of 91°C and a Hydroxyl Number of 85 mg KOH/g sample. The functionalized ethylene-based polymer is PRIMACOR™ 1430, available from The Dow Chemical Company (Midland, MI), which is an ethylene acrylic acid copolymer having a density of 0.930 g/cc, a melt index, 12, of 5.0 g/10 min, and an acrylic acid content of 9.7 wt.%. The chemical foaming agent is LUVOBATCH™ PE BA 9537, available from Lehmann&Voss&Co. (Hamburg, Germany).

**Table 1 - Film Formulations**

| | Formulation |
|---|---|
| Comparative Example 1 (CE1) | 100 wt.% DOWLEX™ 2107 GC |
| Comparative Example 2 (CE2) | 99 wt.% DOWLEX™ 2107 GC + 1 wt.% UNITHOX™ 420 |
| Comparative Example 3 (CE3) | 98 wt.% DOWLEX™ 2107 GC + 2 wt.% UNITHOX™ 420 |

(continued)

| | Formulation |
|---|---|
| Inventive Example 1 (IE1) | 98 wt.% DOWLEX™ 2107 GC + 1 wt.% UNITHOX™ 420 + 1 wt.% PRIMACOR™ 1430 |

Film formulations CE2, CE3, and IE1 in Table 1 were melt blended in a Buss compounder. Monolayer films were fabricated using the film formulations on a Dr. Collin GmbH cast extrusion line equipped with one extruder. The processing temperature was set at around 200 to 260°C with melt temperature at around 240°C. The extrudate was cooled by chilling rolls set at 30°C. The final film thickness is 200 micrometers. Additional processing parameters are shown in Table 2 below.

**Table 2 - Process Conditions**

| | | CE1 | CE2 | CE3 | IE 1 |
|---|---|---|---|---|---|
| Compounding | Kneader Speed (rpm) | | 80 | 85 | 90 |
| Compounding | Motor Current (A) | | 3 | 3 | 3 |
| Compounding | Output Rate (Kg/h) | | 9 | 9 | 9 |
| Compounding | Screw Speed (rpm) | | 115 | 115 | 115 |
| Compounding | Thermocouple K1 (°C) | | 120 | 120 | 120 |
| Compounding | Thermocouple K2 (°C) | | 130 | 130 | 130 |
| Compounding | Thermocouple K3 (°C) | | 140 | 140 | 140 |
| Compounding | Thermocouple K5 (°C) | | 120 | 120 | 120 |
| Compounding | Thermocouple K4 (°C) | | 135 | 135 | 135 |
| Extrusion Cast | Die gap (mm) | 1 | 1 | 1 | 1 |
| Extrusion Cast | Line Speed (m/min) | 2.1 | 2 | 2 | 2 |
| Extrusion Cast | Melt Pressure (bar) | 54 | 54 | 56 | 57 |
| Extrusion Cast | Melt Temperature (°C) | 212 | 213 | 208 | 212 |
| Extrusion Cast | Motor Current (A) | 8 | 7.9 | 8 | 8.2 |
| Extrusion Cast | Output Rate (Kg/h) | 5 | 5 | 5 | 5 |
| Extrusion Cast | Screw Speed (rpm) | 50 | 50 | 50 | 50 |

**Table 3 - Film Results**

| | Water Adsorption (mg water/g polymer) | Water Adsorption After Rinsing (mg water/g polymer) | Water Contact Angle (°) |
|---|---|---|---|
| CE1 | 50 | -- | 97 |
| CE2 | 176 | 126 | 50 |
| CE3 | 290 | 168 | -- |
| IE1 | 226 | 203 | -- |

As shown in Table 3, the inventive film (IE1) shows enhanced water adsorption capability over its direct counterpart (CE2) at initial conditions. In addition, after mild organic solvent rinsing the inventive film showed the highest water adsorption, even above that with higher surfactant content (CE3).

Artificial Turf Filament

Inventive and comparative artificial turf monofilaments were prepared from the inventive and comparative formulations listed below.

**Table 4 - Artificial Turf Filament Formulations**

| | Formulation |
|---|---|
| Comparative Example 4 (CE4) | 95 wt.% DOWLEX™ 2107 GC + 5 wt.% SICOLEN™ 95-133805 |
| Comparative Example 5 (CE5) | 94.5 wt.% DOWLEX™ 2107 GC + 5 wt.% SICOLEN™ 95-133805 + 0.5 wt.% UNITHOX™ 420 |
| Inventive Example 2 (IE2) | 94 wt.% DOWLEX™ 2107 GC + 5 wt.% SICOLEN™ 95-133805 + 0.5 wt.% UNITHOX™ 420 + 0.5 wt.% PRIMACOR™ 1430 |
| Inventive Example 3 (IE3) | 93 wt.% DOWLEX™ 2107 GC + 5 wt.% SICOLEN™ 95-133805 + 1 wt.% UNITHOX™ 420 + 1 wt.% PRIMACOR™ 1430 |
| Inventive Example 4 (IE4) | 93 wt.% DOWLEX™ 2107 GC + 5 wt.% SICOLEN™ 95-133805 + 1 wt.% LUVOBATCH™ PE BA 9537 + 0.5 wt.% UNITHOX™ 420 + 0.5 wt.% PRIMACOR™ 1430 |
| Inventive Example 5 (IE5) | 92.5 wt.% DOWLEX™ 2107 GC + 5 wt.% SICOLEN™ 95-133805 + 1.5 wt.% LUVOBATCH™ PE BA 9537 + 0.5 wt.% UNITHOX™ 420 + 0.5 wt.% PRIMACOR™ 1430 + 1 wt.% |
| Inventive Example 6 (IE6) | 92 wt.% DOWLEX™ 2107 GC + 5 wt.% SICOLEN™ 95-133805 + 2 wt.% LUVOBATCH™ PE BA 9537 + 0.5 wt.% UNITHOX™ 420 + 0.5 wt.% PRIMACOR™ 1430 |
| Inventive Example 7 (IE7) | 91 wt.% DOWLEX™ 2107 GC + 5 wt.% SICOLEN™ 95-133805 + 2 wt.% UNITHOX™ 420 + 1 wt.% PRIMACOR™ 1430 + 1 wt.% LUVOBATCH™ PE BA 9537 |

Each of the artificial turf monofilaments was prepared on an extrusion line from Oerlikon Barmag (Remscheid, Germany) (*See* FIG. 1) as described herein. All components were fed via independent hoppers to the extruders. Table 5A & 5B and FIG. 1 provide specific conditions of the equipment used in preparing the inventive and comparative monofilaments. All samples were produced with diamond profile and melt temperature was set to about 230°C.

**Table 5A - Artificial Turf Filament Processing Conditions**

| | P1 [bar] | P2 [bar] | P3 [bar] | stretch total | Relax total | overall Ratio | speed final V5[m/min] |
|---|---|---|---|---|---|---|---|
| CE4 | 121 | 50 | 154 | 5.1 | 0.71 | 3.6 | 140 |
| CE5 | 129 | 50 | 162 | 5.1 | 0.72 | 3.6 | 140 |
| IE2 | 143 | 50 | 159 | 4.9 | 0.75 | 3.7 | 142 |
| IE3 | 108 | 50 | 163 | 4.9 | 0.75 | 3.7 | 142 |
| IE4 | 156 | 50 | 152 | 4.3 | 0.75 | 3.2 | 124 |
| IE5 | 184 | 50 | 149 | 4.3 | 0.75 | 3.2 | 124 |
| IE6 | 175 | 50 | 150 | 4.3 | 0.75 | 3.2 | 124 |
| IE7 | 121 | 50 | 153 | 4.9 | 0.75 | 3.7 | 142 |

**Table 5B - Artificial Turf Filament Processing Conditions**

| | Temperature first oven (135, FIG.1) [°C] | Temperature second oven (140, FIG.1) [°C] | Temperature third oven (145, FIG.1) [°C] | Distance water bath [mm] | Cooling bath [°C] |
|---|---|---|---|---|---|
| CE4 | 112 | 118 | 118 | 40 | 36 |

(continued)

|  | Temperature first oven (135, FIG.1) [°C] | Temperature second oven (140, FIG.1) [°C] | Temperature third oven (145, FIG.1) [°C] | Distance water bath [mm] | Cooling bath [°C] |
|---|---|---|---|---|---|
| CE5 | 112 | 118 | 118 | 40 | 36 |
| IE2 | 112 | 118 | 118 | 40 | 36 |
| IE3 | 112 | 118 | 118 | 40 | 36 |
| IE4 | 105 | 118 | 118 | 40 | 36 |
| IE5 | 105 | 118 | 118 | 40 | 36 |
| IE6 | 105 | 118 | 118 | 40 | 36 |
| IE7 | 112 | 118 | 118 | 40 | 36 |

The inventive and comparative monofilaments were tested for various properties, and the results are shown in Table 6.

**Table 6 - Monofilament Results**

|  | Basis Weight (dtex) | Tenacity [cN/dtex] | Ultimate Elongation [%] | Shrinkage [%] in 20 sec. (90°C hot oil) | Pressure [bar] |
|---|---|---|---|---|---|
| CE4 | 1938 | 0.751 | 53.8732 | 6 | 154 |
| CE5 | 1979 | 0.76 | 52.5954 | 6 | 162 |
| IE2 | 1994 | 0.743 | 49.2814 | 5.8 | 159 |
| IE3 | 1937 | 0.753 | 48.3939 | 5.5 | 163 |
| IE4 | 2024 | 0.634 | 54.8389 | 5.2 | 152 |
| IE5 | 2076 | 0.578 | 52.8338 | 6.4 | 149 |
| IE6 | 2154 | 0.48 | 41.8958 | - | 150 |
| IE7 | 1955 | 0.799 | 50.776 | 6 | 153 |

As shown in Table 6, the inventive filaments could be successfully processed with good yarn properties for the turf application. Tenacity and elongation were not significantly modified in the inventive examples as compared with the comparative examples. Shrinkage and processability as a function of pressure of the inventive examples was either comparable or improved over the comparative examples.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

**Claims**

1. An artificial turf filament comprising:

   one or more ethylene/alpha-olefin copolymers having a density of from 0.900 to 0.955 g/cc and a melt index, I2, as measured in accordance with ASTM D1238 (at 190°C. and 2.16 kg), of from 0.1 g/10 min to 20 g/10 min;
   an ethoxylated alcohol having the formula, $R_1(OCH_2CH_2)_xOH$, where x is an integer from 2 to 10 and R1 is a straight or branched chain alkyl of 20 to 50 carbon atoms; and
   a functionalized ethylene-based polymer.

2. The filament of claim 1, wherein the filament comprises at least 75 wt.% of the one or more ethylene/alpha-olefin copolymers.

3. The filament of claims 1 or 2, wherein the filament comprises from 0.05 wt.% to 10 wt.% of the functionalized ethylene-based polymer.

4. The filament of claims 3, wherein the functionalized ethylene-based polymer is ethylene acrylic acid.

5. The filament of claims 1-4, wherein the filament comprises from 0.05 wt.% to 10 wt.% of the ethoxylated alcohol.

6. The filament of claims 1-5, wherein the ethoxylated alcohol is an ethoxylated aliphatic alcohol.

7. The filament of claims 1-6, wherein the filament further comprises a chemical foaming agent.

8. The filament of claims 1-7, wherein the filament comprises from 0.05 wt.% to 10 wt.% of the chemical foaming agent.

9. An artificial turf comprising:

a primary backing having a top side and a bottom side; and
at least one artificial turf filament according to claim 1;
wherein the at least one artificial turf filament is affixed to the primary backing such that the at least one artificial turf filament provides a tufted face extending outwardly from the top side of the primary backing.

10. The artificial turf of claim 9, wherein the artificial turf field further comprises a secondary backing bonded to at least a portion of the bottom side of the primary backing such that the at least one artificial turf filament is affixed in place to the bottom side of the primary backing.

## Patentansprüche

1. Ein Kunstrasenfilament, das Folgendes beinhaltet:

ein oder mehrere Ethylen/alpha-Olefin-Copolymere mit einer Dichte von 0,900 bis 0,955 g/cm$^3$ und einem Schmelzindex, I2, wie gemessen gemäß ASTM D1238 (bei 190 °C und 2,16 kg), von 0,1 g/10 min bis 20 g/10 min; einen ethoxylierten Alkohol mit der Formel $R_1(OCH_2CH_2)_xOH$, wobei x eine ganze Zahl von 2 bis 10 ist und $R_1$ ein geradkettiges oder verzweigtkettiges Alkyl mit 20 bis 50 Kohlenstoffatomen ist; und ein funktionalisiertes Polymer auf Ethylenbasis.

2. Filament gemäß Anspruch 1, wobei das Filament zu mindestens 75 Gew.-% das eine oder die mehreren Ethylen/alpha-Olefin-Copolymere beinhaltet.

3. Filament gemäß Anspruch 1 oder 2, wobei das Filament zu 0,05 Gew.-% bis 10 Gew.-% das funktionalisierte Polymer auf Ethylenbasis beinhaltet.

4. Filament gemäß Anspruch 3, wobei das funktionalisierte Polymer auf Ethylenbasis Ethylenacrylsäure ist.

5. Filament gemäß den Ansprüchen 1-4, wobei das Filament zu 0,05 Gew.-% bis 10 Gew.-% den ethoxylierten Alkohol beinhaltet.

6. Filament gemäß den Ansprüchen 1-5, wobei der ethoxylierte Alkohol ein ethoxylierter aliphatischer Alkohol ist.

7. Filament gemäß den Ansprüchen 1-6, wobei das Filament ferner ein chemisches Schaummittel beinhaltet.

8. Filament gemäß den Ansprüchen 1-7, wobei das Filament zu 0,05 Gew.-% bis 10 Gew.-% das chemische Schaummittel beinhaltet.

9. Ein Kunstrasen, der Folgendes beinhaltet:

einen primären Träger mit einer Oberseite und einer Unterseite; und
mindestens ein Kunstrasenfilament gemäß Anspruch 1;
wobei das mindestens eine Kunstrasenfilament an dem primären Träger so angebracht ist, dass das mindestens eine Kunstrasenfilament eine getuftete Fläche bereitstellt, die sich von der Oberseite des primären Trägers nach außen erstreckt.

**10.** Kunstrasen gemäß Anspruch 9, wobei das Kunstrasenfeld ferner einen sekundären Träger beinhaltet, der an mindestens einen Abschnitt der Unterseite des primären Trägers gebunden ist, sodass das mindestens eine Kunstrasenfilament ortsfest an der Unterseite des primären Trägers angebracht ist.

**Revendications**

**1.** Un filament de gazon artificiel comprenant :

un ou plusieurs copolymères éthylène/alpha-oléfine ayant une masse volumique allant de 0,900 à 0,955 g/cm$^3$ et un indice de fluidité à chaud, I2, tel que mesuré conformément à l'ASTM D1238 (à 190 °C et 2,16 kg), allant de 0,1 g/10 min à 20 g/10 min ;
un alcool éthoxylé ayant la formule, $R_1(OCH_2CH_2)_xOH$, où x est un entier allant de 2 à 10 et $R_1$ est un alkyle à chaîne droite ou ramifiée de 20 à 50 atomes de carbone ; et
un polymère à base d'éthylène fonctionnalisé.

**2.** Le filament de la revendication 1, le filament comprenant les un ou plusieurs copolymères éthylène/alpha-oléfine à hauteur d'au moins 75 % en poids.

**3.** Le filament des revendications 1 ou 2, le filament comprenant le polymère à base d'éthylène fonctionnalisé à hauteur de 0,05 % en poids à 10 % en poids.

**4.** Le filament de la revendication 3, dans lequel le polymère à base d'éthylène fonctionnalisé est un acide acrylique éthylène.

**5.** Le filament des revendications 1 à 4, le filament comprenant l'alcool éthoxylé à hauteur de 0,05 % en poids à 10 % en poids.

**6.** Le filament des revendications 1 à 5, dans lequel l'alcool éthoxylé est un alcool aliphatique éthoxylé.

**7.** Le filament des revendications 1 à 6, le filament comprenant en sus un agent moussant chimique.

**8.** Le filament des revendications 1 à 7, le filament comprenant l'agent moussant chimique à hauteur de 0,05 % en poids à 10 % en poids.

**9.** Un gazon artificiel comprenant :

un dossier primaire ayant un côté de dessus et un côté de dessous ; et
au moins un filament de gazon artificiel selon la revendication 1 ;
dans lequel l'au moins un filament de gazon artificiel est fixé au dossier primaire de sorte que l'au moins un filament de gazon artificiel donne une face tuftée qui s'étend vers l'extérieur à partir du côté de dessus du dossier primaire.

**10.** Le gazon artificiel de la revendication 9, dans lequel le champ de gazon artificiel comprend en sus un dossier secondaire collé à au moins une portion du côté de dessous du dossier primaire de sorte que l'au moins un filament de gazon artificiel est fixé en place sur le côté de dessous du dossier primaire.

**FIG. 1**

**FIG. 2**

**EP 3 421 666 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7498282 B
- US 2011082256 A
- US 6146757 A
- US 9255160 B

**Non-patent literature cited in the description**

- Polyolefin Foam. **C. P. PARK.** Handbook of Polymeric Foams and Technology. Hanser Publishers, 1991
- **WILLIAMS ; WARD.** *J. Polym. Sci., Polym. Let.,* 1968, vol. 6, 621